# EUROPEAN PATENT SPECIFICATION

(11) **EP 0 705 285 B1**
(45) Date of publication and mention of the grant of the patent: **19.08.1998**
(21) Application number: 93907894.5
(22) Date of filing: 08.04.1993
(51) Int. Cl.: C08F 251/00, D21H 19/62

(54) **A THICKENING DISPERSION AND ITS UTILIZATION**
VERDICKUNGSDISPERSION UND IHRE VERWENDUNG
DISPERSION EPAISSISSANTE ET APPLICATION DE CELLE-CI

(30) Priority: 16.04.1992 FI 921752
(43) Date of publication of application: 10.04.1996
(73) Proprietor: RAISIO CHEMICALS OY, 21200 Raisio (FI)
(72) Inventor: HAMUNEN, Antti, SF-21200 Raisio (FI); ANTTILA, Mika, SF-20320 Turku (FI); NURMI, Kari, SF-21200 Raisio (FI)
(74) Representative: Haimelin, Jukka Ilmari
(86) International application number: FI9300153
(87) International publication number: WO9321244

(56) References cited:
- EP-A- 0 334 515
- EP-A- 0 356 241
- US-A- 4 134 863

## Description

The present invention relates to a method for controlling the rheology and water retention of coating colours used in the preparation of coated paper grades.

The most important property of a good colour used in the coating of paper is the correct rheology. At low shearing speeds, the colour is to have a sufficiently high viscosity, so that the coating layer is not excessively absorbed into the paper and thus cause a spot-like coating result. At high shearing forces prevailing e.g. under the blade applying the coating colour onto the paper surface, the viscosity is to be low to make the coating occurring at high speeds on the whole possible. In other words, the colours are to be shearing thinning by nature. Another essential property required by the coating colours - especially in connection with roll application - is water retention. If this property is omitted, the solids content of the colour in the coating process does not remain constant and the water retention into the base paper causes a spot-like coating result. In addition, the effective agents travelled along with the aqueous phase, such as optic brighteners, travel into the base paper or back to the colour circulation, due to which the coating result does not remain constant and the composition of the coating colour may change in the colour circulation.

For the adjustment of the colour rheology and water retention is generally used cellulose derivatives, such as carboxy methyl cellulose and hydroxy ethyl cellulose. By means of these, a relatively good result is generally achieved. A problem in connection therewith is a relatively complex preparation process and because of that a high price, and on the other hand the problems related to the treatment thereto. These chemicals are in fact delivered to the users as solid powders, whose solubility in water is very limited and slow. In addition to a cumbersome treatment, the water brought along with the dissolved cellulose derivative limits the selection of the colour components, when high-solids-content coating colours are aimed at.

There are on the market also fully synthetic thickeners to be delivered in liquid form, which are generally prepared by polymerizing unsaturated, usually acrylate monomers into a polymer dispersion. However, their thickening properties do not correspond to cellulose derivatives, e.g. relative to the water retention. Also, the carrying capacity of optic brighteners is in this connection also lower. The preparation of acrylate dispersions of this type has been described as early as in 1958 in a patent specification US 2 819 189 (Suen et al., American Cyanamide Company), in which patent a reference is also made to a possibility of using the product as a thickener. The US patent 4 423 118 from the year 1983 (Corbett, Aschwanden, The Dow Chemical Company) describes the preparation and usage of a product polymerized from three acrylate monomers of a different type. The dispersion products prepared according to the patent are already at a fairly low solids content very viscous and thereby difficult to treat. The example 2 of said patent publication illustrates the limitations related to the usage of certain acrylic polymer dispersion compositions.

The method according to the present invention, characterized by the features disclosed in appended claim 1, offers a solution to the drawbacks mentioned above.

By polymerizing suitable monomers into a polymer chain backbone, especially into a suitably treated starch, it is possible to achieve a low-viscosity dispersion product, whose thickening properties both for the rheology and the water retention, are ideal already at very low dosing levels. The advantages related to the usage of the dispersion prepared according to the invention thereby include easy utilization, good technical applicability, and due to small dosing quantities required, a better economicality than that prevailed earlier.

A central preparation technique of the polymer dispersion is based on a grafting reaction, wherein into a chain backbone containing functional groups suitable from the point of view of the reaction, initialized by a radical reaction, are joined polymerizing monomers/monomer mixtures providing suitable properties. The term "dispersion" is to be understood in this connection widely, since at certain monomer/monomer chain backbone polymer ratios, the products are nearly totally or totally in the form of a solution.

In practise, groups achieving the radical initiation necessary from the point of view of the reaction, hydroxyl and amino groups are concerned. In this way, natural chain backbone materials are concerned, especially natural carbohydrates (e.g. starch, cellulose and alginates) proteins (e.g gelatin, collagen, gluten, casein and soybean protein), but also synthetic molecules, such as polyvinyl alcohol, polyaimides and polyacrylic amide are technically possible polymeric chain backbone molecules.

In addition to the functionality enabling the radical initiation, another property required of the chain backbone polymer is a correct molecular size and water solubility. Because of this, most compounds mentioned above are not as such chain backbone materials suitable for grafting, but they have to be modified by splitting up or hydrolytically for reaching the correct state.

As especially advantageous chain backbone materials suitable for grafting are considered to be starches of a different origin, since their availabity is good, they are very economical, their functionability in grafting reactions is excellent, as is well known, and their modification to a suitable solubility/molecular level is well controlled. Split-up starch modifications directly suitable for the preparation of the dispersion are commercially available, but the splitting up may be preferably performed also in situ as the first step of the preparation process by using an acidic or enzymatic hydrolysis or different oxidation methods. An especially preferable way of performing the necessary splitting-up reaction is thus an oxidation catalyzed by hydrogen peroxide, since the catalyst system used later also catalyzes the grafting reaction, and no extra components travel into the reaction mixture, which would require cleaning operations.

As is well known, the molecular size of polymers correlates with the viscosity of the polymer solution. In this way, the splitting-up degree suitable for the preparation of the dispersion may be controlled by means of viscosity measurements. It has been established that a practical viscosity level of the split-up starch solution, as measured from a 10%-solution at a temperature of 25°C by means of a Brookfield RVTDV II viscosity meter, by means of a measuring head 2 and at a rate of 100 rpm immediately after the cooling of the starch solution is in the range of 10-200 mPas. When using starch polymer providing a higher viscosity level, the grafting results in a dispersion product, whose viscosity is within an applicable range only at very dilute concentrations.

By using hydrogen peroxide, and a potato starch as raw material, a usable oxidation level is reached by a 35% hydrogen peroxide when a dosing of 1-10% as calculated on the amount of the dry starch is used. The splitting-up is preferably performed at a temperature of 25-50°C in a starch slurry, whose starch content is ca. 10-45%. A sufficient reaction time is thus ca. 2 hours. The oxidized starch to be obtained from the splitting-up process is in an insoluble granular form. For the further process, this product is to be made water soluble by gelatinizing the product. This occurs by heating the slurry to a sufficiently high temperature. In practise, especially for the preparation of the product used in the invention, it is purposeful to perform the heating at 100°C for at least 10-15 min for dissolving all the granules. It is generally most preferable to perform the gelatinization immediately in connection with the splitting-up process, but in several cases it is possible also after the radical polymerization.

An essential part of the preparation of the inventive dispersion is the grafting of monomers onto the polymer chain backbone described above. Critical quantities for achieving an optimal functionability include the monomer composition, the amount of monomers in relation to the chain backbone material, the catalyst system achieving the radical initiation as well as the reaction temperature.

Essential thickening properties are determined on the basis of the monomer composition used. It has been observed that as grafting monomers are to be used on the one hand α-, β-ethylenically unsaturated carboxylic acids (A) and on the other hand more hydrophobic monomers, whose solubility in water is limited (B). As for the solubility, as the base value may be given a value such that the solubility should be below 20 g of the monomer in 100 g of the aqueous solution. As examples of suitable unsaturated carboxylic acids are all unsaturated acids containg 3-8 carbon atoms, but it is especially preferable to use an acrylic acid or a methacrylic acid. Suitable monomers having a limited solubility are e.g. acrylonitrile, vinyl acetate, methyl methacrylate, as well as ethyl and methyl acrylates. An especially suitable material for the preparation of the dispersion is acrylonitrile. It is to be noted that varying amounts of other polymerizing monomers may also be used, such as styrene, acrylic amide and butyl acrylate, but these do not provide a significant improvement in the thickener properties and when used in too large an amount, they are detrimental.

The mutual ratio of the monomers A and B is important both with-respect to the external properties and to the thickening properties of the product. It has been observed that the molar ratio A/B may vary about in the limits 0.2-4.0 also depending on the chain backbone/monomer quantity ratio used. At too low A/B ratios, the stability of the dispersion is too weak, but on the other hand too high a ratio results in a high viscosity of the product and also in a disadvantageous water retention when used in coating colours. The A/B ratio to be used preferably varies within the limits 0.5-3 and most preferably within the limits 0.5-1.5.

The amount of the chain backbone material has an effect both on the external and functional properties of the product. When split-up starch is used as the chain backbone material, its amount may vary upwards from 1%. However, at low starch quantities, the grafting reaction becomes more difficult and at the same time, especially if the the A/B ratio is low, the stability of the product suffers. (A limiting case of an emulsion polymerization is concerned, wherein emulgators should be used for facilitating the provision of the product.) A preferable quantity of starch is within a range of 10-70% of the total solid matter. It has been observed that an increase in the relative quantity of starch improves the water retention properties of the thickened product, but it weakens the viscosity stability of the dispersion itself, and after a certain optimal range also the ability of increasing the viscosity decreases. From the point of view of totality, the most preferable starch content is thus mostly within the range of 20-50% from the solid matter.

The monomers are joined to the chain backbone polymer by means of a radical polymerization reaction. In the case of the inventive type, the reaction is often termed as grafting. The reaction may be achieved by means of radical initiators known as such, which may be chemical (e.g. ammonium and potassium persulfhates, hydrogen peroxide, organic peroxides) or physical, such as by means of radiation by electron-, gamma- or UV-radiation. The reaction conditions as well as the functional properties of the product to be obtained naturally vary according to the initiation system to be used. For example, the grafting initiated by the radiation may be performed already at room temperature. Instead, the reaction as catalyzed by the peroxides and persulphates for reaching in practice a sufficient speed requires an elevated temperature of more than 40°C, but preferably more than 60°C. It has also been observed that the thickening effect of the product often significantly improves, when the temperature in the initial step of the reaction is first lower, e.g. within the range of 60-70°C, and the temperature is finally increased to a higher level (> 80°C) e.g. for two hours.

When catalyzed by persulphates, the reaction may be performed in a normal atmosphere, whereas when catalyzed by hydrogen peroxide, the reaction requires a non-oxidizing atmosphere. Both from the point of view of the thickening ability and the external properties (low dispersion viscosity) of the product, an especially preferable initiation catalysis is obtained by means of hydrogen peroxide either alone or especially combined as an oxidation-reduction pair together with an organic compound having a multi-valued metal salt or an oxidation-reduction ability. Said suitable compounds to be used together with hydrogen peroxide include e.g. copper salts, iron salts (Fenton's reagent), ascorbic acid and hydroquinone.

The dispersion product based on the inventive split-up starch may be manufactured up to about an 50% solids content, mainly depending on splitting-up degree and the monomer ratios of the starch. With respect to the thickener effect and viscosity stability of the dispersion, an optimal solids content is ca. 15-30% at a monomer ratio A/B of ca. 0.5-1.5. In this case, it is possible to obtain as a product a very easily treatable, low-viscosity (40-100 mPas) and stable dispersion, which provides for the colour in a pigment coating application ideal viscosity properties within a very extensive shearing speed range as well as an excellent water retention.

The pH-value of the dispersion prepared as described above is within the range of 1.8-5, the more acidic end of whose range describes a situation, in which the monomer ratio A/B is high and/or a catalyst system decreasing the pH-value as an initiator. The thickening effect of the product will be evident in an environment, whose pH-value is higher than the pH-value of the product itself. Because of this, it is apparent that the thickening effect is on the one hand based on interactions, which prevail between ionized carboxyl groups and the more hydrophobic groups of the polymer, as well as on the adsorption between these groups and the particles (e.g. pigments) existing in the medium to be thickened.

The following examples illustrate in detail the preparation of the thickening dispersion and its usage as a thickener of a pigment colour.

### Example 1

93.80 g of hypochlorite oxidized potato starch Raisamyl 302E, whose viscosity as a 10% water solution at 25°C is 22 mPas, was elutriated into 900 g of water. The starch was gelatinized by admixing this slurry at an elevated temperature of 100°C for 20 min, whereafter the temperature was decreased to 70°C. Into the solution was added 0.1 g of copper sulphate and a nitrogen elutriation was arranged into the reaction vessel for eliminating the oxygen. It was then simultaneously started to drop into the reaction mixture from dropping funnels a 35-% hydrogen peroxide (the total amount 5.2 g diluted into 60 ml of water) as well as a mixture, which contained 142 g of acrylic acid and 104 g of acrylonitrile (molar ratio 1.0). The monomer mixture was added totally within 1.5 hours and the catalyst within 3 hours. The reaction was allowed to continue for still 20 hours. As a product was obtained a white-like dispersion, whose solids content was 25.8%, pH-value 3.3, viscosity 54 mPas (25°C) and the average particle size 490 nm. The product did not contain any precipitate. According to a gas chromatography analysis, the content of unreacted acrylonitrile contained by the product was 60 ppm and the amount of free acrylic acid was 0.05%.

### Example 2

The effect of the quantity ratios, the catalyst selection as well as the gelatinizing procedure of the starch derivative used as the chain backbone polymer, on the quality of the final product was clarified using the same reagents as in Example 1. The abbreviations used:
Catalyst: APS = ammonium persulphate, PER=H₂O₂-CuSO₄.
TMO: GEL = the starch is gelatinized before the radical reaction, GRA = the starch is gelatinized after the radical reaction.
AsN: molar ratio: acrylic acid/acrylonitrile.
SsSY: molar ratio: starch/synthetic monomer
%ST (starch), %AC (acrylic acid), %NIT (acrylonitrile): composition by percent.
Dry matter content (d.m.c.): the solids content-% of the product.
viscosity (visc. ): the Brookfield viscosity of the product mPas at 25°C.

The results are shown in the enclosed Table 1.

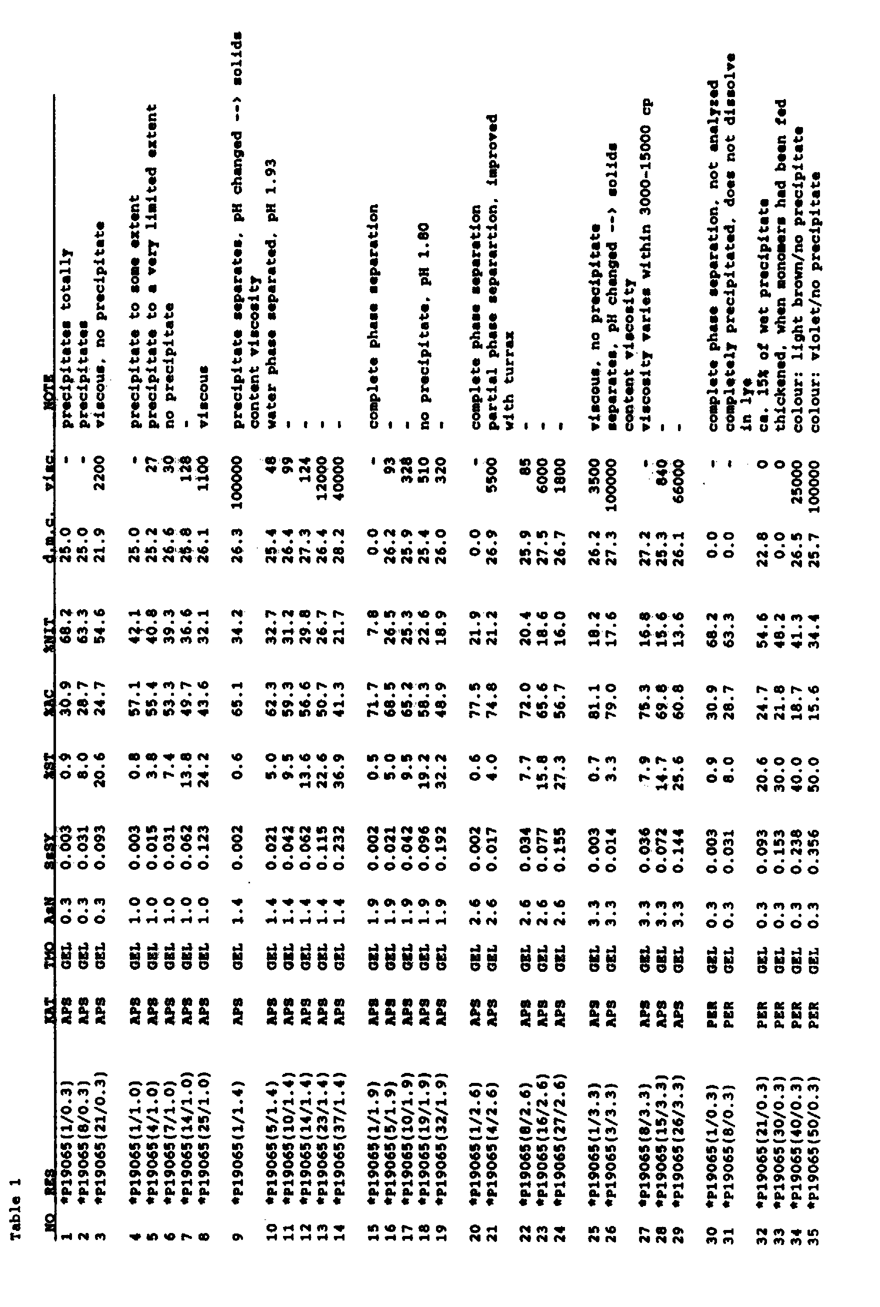

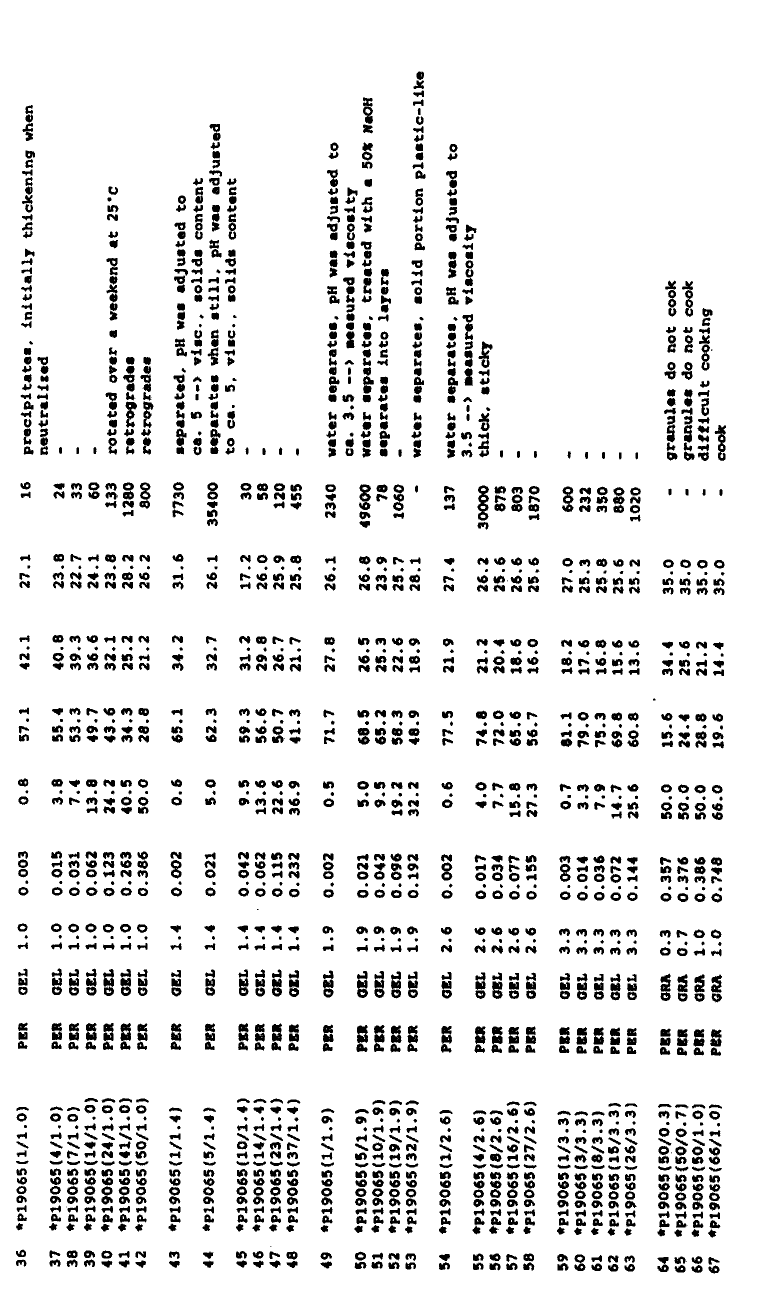

### Example 3

In this example, as a chain backbone polymer was used a native potato starch, which was split up by oxidizing it by hydrogen peroxide in the first step of the reaction. 75.12 g of native potato starch was elutriated in water and into this was added 4.2 g of a 35% hydrogen peroxide. The mixture was allowed to mix at a temperature of 40°C for 2 hours, whereafter the temperature was increased to 97-100°C for gelatinizing the product for 2 hours. The reaction was then continued according to Example 1 at the reagent ratios of the example. As a product was obtained a white dispersion, whose solids content was 23.8%, viscosity 64.4 mPas and average particle size 870 nm. The pH-value of the product was 3.1 and the acrylonitrile residue was 90 ppm and the acrylic acid residue 0.1%.

### Example 4

A synthesis according to Example 1 was performed, in which 170 g of methacrylic acid (A/B molar ratio 1.0) was used in place of acrylic acid. As a product was obtained a white low-viscosity dispersion, whose acrylonitrile residue was 100 ppm.

### Example 5

A synthesis according to Example 1 was performed, in which 170 g of metacrylic acid and 168 g of vinyl acetate (A/B molar ratio = 1) were used in place of acrylic acid. The total amount of water used for elutriating the starch and for diluting the peroxide was 1475 g. As a product was obtained a white low-viscosity dispersion.

### Example 6

A synthesis according to Example 1 was performed, in which the acrylic acid was replaced with 196 g of ethyl acrylate (A/B = 1) and the total amount of water was 1730 g. As a reaction product was obtained a white dispersion, whose viscosity was 350 mPas.

### Example 7

In this example, the functionalibity of a dispersion as a coating-colour thickener is compared with a commonly used carboxy methyl cellulose thickener, CMC Finnfix-10. The results listed in the following table are based on measurements, which have been performed from the following, by its composition typical LWC offset coating colour:

| Solids fractions | |
|---|---|
| SPS kaolin | 100 |
| SB latex + thickener | 11 |
| Calcium stearate | 0,5 |
| Solids content | 60% |
| pH | 7,5 |

The reference is a colour, which contains no thickener. In addition, into the colour has been added 0.25-1.0 solids fractions of the thickener per 100 pigment fractions, and the Brookfield viscosity, water retention (Wat.r.) as well as Haake viscosity have been measured at a shearing speed 10000 l/s (mPas). In the measurement has been used a water retention meter ÅAGWR developed by Åbo Akademi, which meter measures the drainage of water from the colour, when it is pressed at a certain pressure through a dense filter. The unit is g/m². The water retention of the colour is thus the higher, the lower the read-out is.

**TABLE 2**

| Sample | REF | FF-10 | FF-10 | FF-10 | FF-10 | 25/1.0 | 25/1.0 | 25/1.0 | 25/1.0 |
|---|---|---|---|---|---|---|---|---|---|
| Fract. | 0.0 | 0.25 | 0.5 | 0.75 | 1.0 | 0.25 | 0.5 | 0.75 | 1.0 |
| Visc. | 156.0 | 546.0 | 1040.0 | 1580.0 | 2200.0 | 1070.0 | 1560.0 | 2330.0 | 2680.0 |
| Wat.r. | 114.4 | 95.8 | 79.6 | 66.0 | 56.1 | 71.1 | 57.8 | 38.8 | 33.1 |
| Haake | 80.0 | 120.0 | 130.0 | 185.0 | 205.0 | 133.0 | 183.0 | 218.0 | 225.0 |
| | | | | | | | | | |

As it may be observed from the results of the table, the dispersion prepared according to Example 1 clearly causes a higher increase in the Brookfield viscosity level than carboxy methyl cellulose. At a high shearing speed, the viscosity level drops to a level corresponding to that of carboxy methyl cellulose. The dispersion provides for the colour a better water retention than that of carboxy methyl cellulose.

## Claims

1. A method for controlling the rheology of aqueous, mineral pigment containing coating colour compositions for paper coating by adding to the coating colour composition a polymer dispersion, **characterized** in that the polymer solution or dispersion added comprises a polymer prepared by graft-polymerizing onto a water soluble or solubilized chain backbone polymer at least one α-, β-unsaturated carboxylic acid having 3-8 carbon atoms and at least one monomer having a solubility of less than 20 grams per 100 grams of solution, the ratio of the carboxylic acid to the at least one monomer being in the range of 0.2 to 4.0, and controlling the pH of the coating colour and polymer dispersion mixture to exeed the initial pH 1.8 - 5 of the polymer dispersion.

2. A method according to claim 1, **characterized** in that in the method is used a polymer dispersion prepared from a starch derivative degraded to a viscosity level of 10-200 mPas, measured at 25°C from a 10% solution made water-soluble by heating.

3. A method according to claim 1, **characterized** in that the polymer dispersion is used in amounts of 0.1 to 2.0 solids fraction per 100 weight fractions of the mineral pigment.

4. A method according to claim 1, **characterized** in that a polymer dispersion is used where the α-, β- unsaturated acid is an acrylic acid, a methacrylic acid or a mixture thereof.

5. A method according to claim 1, **characterized** in that a polymer dispersion is used where the limited water soluble monomer is acrylonitrile, vinyl acetate, methyl methacrylate, ethyl or methyl acrylate or a mixture thereof.

6. A method according to claim 1, **characterized** in that a polymer dispersion with a starch content of 10 to 70% by weight is used.

## Patentansprüche

1. Verfahren zur Einstellung der rheologischen Eigenschaften wasserhaltiger Beschichtungsfarbkompositionen enthaltend mineralisches Pigment, zur Beschichtung von Papier, durch Zusatz einer Polymerdispension zu der Beschichtungsfarbkomposition, dadurch **gekennzeichnet,** daß die zugesetzte Polymerlösung oder Polymerdispersion ein Polymer enthält, das durch Pfropfpolymerisieren mindestens einer α-, β-ungesättigten Carbonsäure mit 3 bis 8 Kohlenstoffatomen, und zumindest eines Monomers mit einer Löslichkeit von weniger als 20 Gramm pro 100 Gramm der Lösung, auf ein wasserlösliches oder solubilisiertes Polymer-Kettengerüst hergestellt wird, wobei das Verhältnis der Carbonsäure zu dem mindestens einem Monomer 0,2 : 4,0 beträgt, und der pH-Wert der Mischung aus der Beschichtungsfarbe und der Polymerdispersion so reguliert wird, daß er den Ausgangs-pH-Wert der Polymerdispersion von 1,8 - 5 übersteigt.

2. Verfahren nach Anspruch 1, dadurch **gekennzeichnet,** daß in dem Verfahren eine Polymerdispersion verwendet wird, die aus einem Stärkederivat hergestellt worden ist, das bis zu einer Viskosität von 10 - 200 mPAS, gemessen an einer durch Erhitzen wasserlöslich gemachten 10-%igen Lösung bei 25° C, aufgespalten worden ist.

3. Verfahren nach Anspruch 1, dadurch **gekennzeichnet**, daß die Polymerdispersion in Mengen von 0,1 bis 2,0, gerechnet als Feststoffgehalt, pro 100 Gew.-Teile des Mineralpigments verwendet wird.

4. Verfahren nach Anspruch 1, dadurch **gekennzeichnet,** daß eine Polymerdispersion verwendet wird, in der die α,β-ungesättigte Säure eine Acrylsäure, eine Methacrylsäure oder deren Mischung ist.

5. Verfahren nach Anspruch 1, dadurch **gekennzeichnet,** daß eine Polymerdispersion verwendet wird, in der das beschränkt wasserlösliche Monomer Acrylnitril, Vinylacetat, Methylmethacrylat, Ethyl- oder Methylacrylat oder deren Mischung ist.

6. Verfahren nach Anspruch 1, dadurch **gekennzeichnet**, daß eine Polymerdispersion mit einem Stärkegehalt von 10 bis 70 Gew.-% verwendet wird.

## Revendications

1. Procédé pour contrôler la rhéologie de compositions couleurs aqueuses de revêtement contenant un pigment minéral pour le couchage du papier par addition à la composition couleur de revêtement d'une dispersion de polymère, caractérisé en ce que la solution ou la dispersion de polymère ajoutée comprend un polymère préparé par polymérisation par greffage sur un polymère de chaîne principale soluble ou solubilisé dans l'eau d'au moins un acide carboxylique α,β-insaturé comprenant 3-8 atomes de carbone et au moins un monomère ayant une solubilité inférieure à 20 grammes pour 100 grammes de solution, le rapport de l'acide carboxylique au monomère, au nombre d'au moins un, étant dans la gamme de 0,2 à 4,0, et par contrôle du pH du mélange de la composition couleur de revêtement et de la dispersion de polymère pour qu'il dépasse le pH initial de 1,8 - 5 de la dispersion de polymère.

2. Procédé selon la revendication 1, caractérisé en ce que dans le procédé, on utilise une dispersion de polymère préparée à partir d'un dérivé d'amidon dégradé à un niveau de viscosité de 10 - 200 mPa.s, mesurée à 25°C à partir d'une solution à 10% rendue soluble dans l'eau par chauffage.

3. Procédé selon la revendication 1, caractérisé en ce que la dispersion de polymère est utilisée en des quantités de 0,1 à 2,0 parties de matières solides pour 100 parties en poids du pigment minéral.

4. Procédé selon la revendication 1, caractérisé en ce qu'une dispersion de polymère est utilisée lorsque l'acide α,β-insaturé est un acide acrylique, un acide méthacrylique ou un mélange de ceux-ci.

5. Procédé selon la revendication 1, caractérisé en ce qu'une dispersion de polymère est utilisée lorsque le monomère à solubilité dans l'eau limitée est l'acrylonitrile, l'acétate de vinyle, le méthacrylate de méthyle, l'acrylate d'éthyle ou de méthyle, ou un mélange de ceux-ci.

6. Procédé selon la revendication 1, caractérisé en ce qu'une dispersion de polymère ayant une teneur en amidon de 10 à 70% en poids est utilisée.
